# EUROPEAN PATENT APPLICATION

(11) **EP 3 896 539 A1**
(43) Date of publication of application: **20.10.2021**
(21) Application number: 20169662.2
(22) Date of filing: 15.04.2020
(51) Int. Cl.: G05B 19/401

(54) **SYSTEM AND METHOD FOR CONTROLLING A MACHINING PROCESS OF A WORKPIECE**

(71) Applicant: Seco Tools AB, 737 82 Fagersta (SE)
(72) Inventor: KARIM, Amir, 737 82 Fagersta (SE)
(74) Representative: Sandvik

(57) **Abstract**

The present disclosure relates to a method (100) and a system (200) for controlling a machining process of a workpiece. First, information regarding a first set of cutting parameters used during the machining process of the workpiece is obtained. Thereafter, imaging data of at least one chip (270) produced during the machining process of the workpiece is obtained. A chip type of the at least one chip (270) is determined based on the obtained imaging data, and a relation between cutting parameters and chip type is determined based on said used first set of cutting parameters and determined chip type. The relation between cutting parameters and chip type is used to control a subsequent machining process of a workpiece.

## Description

### TECHNICAL FIELD

The present disclosure relates to a system as well as a method for controlling a machining process of a workpiece.

### BACKGROUND

A machining process is a process of cutting, or processing, a metal workpiece by means of a tool. The aim of the machining process is to convert the workpiece into a desired shape and size. During the machining process, excess material from the workpiece is removed in the form of chips. The size and shape of the chips give a lot of information about the machining process. By studying the type of chips created during the machining process, the quality of the machining process may be evaluated. The chips directly, or indirectly, indicate the nature and behaviour of material during the machining process, an amount of energy required for removing material and nature and degree of interaction at the chip-tool interfaces. Therefore, the study of chip formation is important to optimize the machining process as well as to develop the cutting tools regarding grade and geometry.

Generally, the study of chip formation is performed by, for a certain machining process, collect a number of a created chips, glue them to a paper chart and save the chart at a suitable location. Even if this process may provide a basis for analysis, the process generally takes a lot of time and produces a limited amount of data, which is both difficult to evaluate and has a poor traceability.

### SUMMARY

As the data used as basis for evaluation of a machining process generally is neither that thorough nor precise, the data is inappropriate to use for evaluation of the machining process. Consequently, the data is also unsuitable for controlling subsequent machining processes. However, the inventors of the various embodiments have realized, after inventive and insightful reasoning, that with the introduction of digital image processing and communicating systems, the knowledge of a machining process may be increased and the possibilities for what may be performed during the machining process may expand. By utilizing an increased and more detailed knowledge of a certain machining process, data that are more relevant may be obtained, relations between different parameters of the machining process that are more accurate may be determined and subsequent machining processes may be controlled in an improved way.

In view of the above, it is therefore a general object of the aspects and embodiments described throughout this disclosure to provide a time efficient method and chip evaluation system that improve the evaluation of machining processes. This improved evaluation of machining processes may subsequently be used to control subsequent machining processes in an improved way.

This general object has been addressed by the appended independent claims. Advantageous embodiments are defined in the appended dependent claims.

According to a first aspect, there is provided a method for controlling a machining process of a workpiece.

In one exemplary embodiment, the method comprises obtaining information regarding a first set of cutting parameters used during the machining process of the workpiece. The method further comprises obtaining imaging data of at least one chip produced during the machining process of the workpiece and determining a chip type of the at least one chip based on the obtained imaging data. Thereafter, the method comprises determining a relation between cutting parameters and chip type based on said used first set of cutting parameters and determined chip type. The relation between cutting parameters and chip type is used to control a subsequent machining process of a workpiece.

In some embodiments, the method further comprises saving the determined relation between cutting parameters and chip type in a database.

In some embodiments, the method further comprises obtaining data indicating a material of the workpiece and/or a tool type used for the machining process of the workpiece and associating said data indicating the material of the workpiece and/or the tool type used for the machining process of the workpiece with the determined relation between cutting parameters and chip type.

In some embodiments, the method further comprises receiving a second set of cutting parameters and determining a chip type that is going to be produced with said second set of cutting parameters based on the determined relation between cutting parameters and chip type. The method further comprises providing the determined chip type related to the second set of cutting parameters to an output device.

In some embodiments, the method further comprises receiving a request for a certain chip type for a subsequent machining process of a workpiece and determining, based on the determined relation between cutting parameters and chip type, a third set of cutting parameters in order to achieve said chip type. The method may further comprise providing the determined third set of cutting parameters to an output device. The method may additionally, or alternatively, comprise controlling the subsequent machining process of the workpiece in accordance with the determined third set of cutting parameters.

In some embodiments, the step of determining a chip type of the at least one chip based on the obtained imaging data comprises extracting a geometry of said at least one chip from said obtained imaging data and determining the chip type of the at least one chip based on the extracted geometry of the at least one chip.

In some embodiments, the method further comprises imaging at least one chip produced during the machining process of the workpiece.

According to a second aspect, there is provided a chip evaluation system implementing the method according to the first aspect.

In one exemplary embodiment, the chip evaluation system is a system for controlling a machining process of a workpiece. The chip evaluation system comprises at least one controller. The at least one controller is configured to obtain information regarding a first set of cutting parameters used during the machining process of the workpiece and to obtain imaging data of at least one chip produced during the machining process of the workpiece. The at least one controller is further configured to determine a chip type of the at least one chip based on the obtained imaging data and determine a relation between cutting parameters and chip type based on said used first set of cutting parameters and determined chip type. The relation between cutting parameters and chip type is used to control a subsequent machining process of a workpiece.

In some embodiments, the chip evaluation system further comprises at least one memory. The at least one controller further is configured to save the determined relation between cutting parameters and chip type in said at least one memory to create a database over relations between cutting parameters and chip type.

In some embodiments, the at least one controller further is configured to obtain data indicating a material of the workpiece and/or a tool type used for the machining process of the workpiece and associate said data indicating the material of the work piece and/or the tool type used for the machining process of the workpiece with the determined relation between cutting parameters and chip type.

In some embodiments, the at least one controller further is configured to receive a second set of cutting parameters and determine a chip type that is going to be produced with said second set of cutting parameters based on the determined relation between cutting parameters and chip type. The at least one controller is further configured to provide the determined chip type related to the second set of cutting parameters to an output device.

In some embodiments, the at least one controller further is configured to receive a request for a certain chip type for a subsequent machining process of a workpiece and to determine, based on the determined relation between cutting parameters and chip type, a third set of cutting parameters in order to achieve said chip type. The at least one controller may further be configured to provide the determined third set of cutting parameters to an output device. Additionally, or alternatively, the at least one controller may further be configured to control the subsequent machining process of the workpiece in accordance with the determined third set of cutting parameters.

In some embodiments, the at least one controller is configured to determine a chip type of the at least one chip based on the obtained imaging data by extract a geometry of said at least one chip from said obtained imaging data and determine the chip type of the at least one chip based on the extracted geometry of the at least one chip.

In some embodiments, the chip evaluation system further comprises an imaging device and said imaging device is configured to image at least one chip produced during the machining process of the workpiece.

Some of the above embodiments eliminate or at least reduce the problems discussed above. By more accurately determining the relationship between cutting parameters used during a machining process of a workpiece with the type of chip produced during the same machining process, subsequent machining processes may be controlled in an improved way. Thus, a method and chip evaluation system are provided, which in a time efficient way determines data that may be used to improve subsequent machining processes.

### BRIEF DESCRIPTION OF DRAWINGS

These and other aspects, features and advantages will be apparent and elucidated from the following description of various embodiments, reference being made to the accompanying drawings, in which:
Figure 1 shows a flowchart of an example method according to one embodiment;
Figure 2 shows a schematic view of a chip evaluation system according to one embodiment;
Figure 3 shows examples of chip types;
Figures 4a-c illustrate examples of chips produced by using certain cutting parameters, tool types and materials; and
Figure 5 shows a schematic view of a computer system.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

In one of its aspects, the disclosure presented herein concerns a method for controlling a machining process of a workpiece. According to another of its aspect, the disclosure presented herein concerns a chip evaluation system implementing the method according to the first aspect.

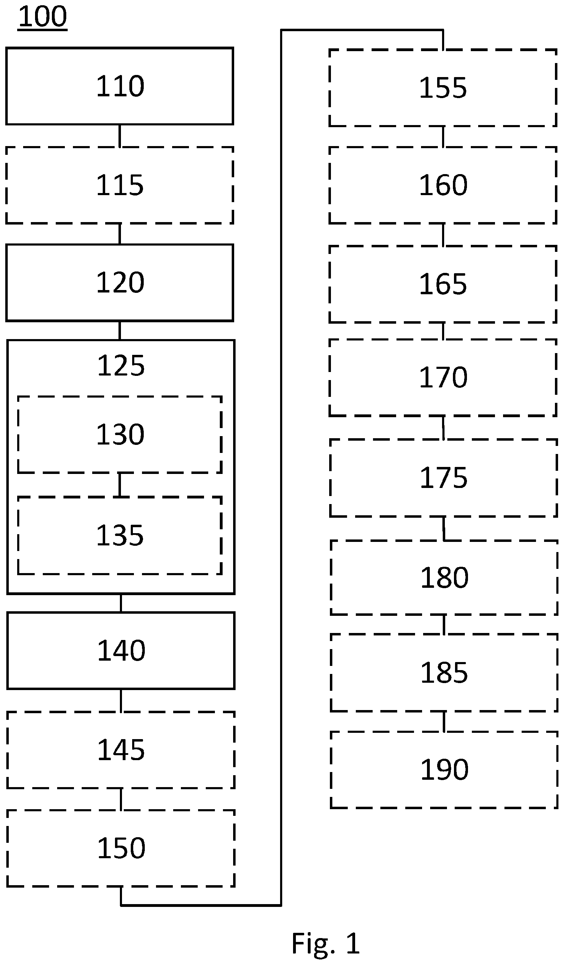

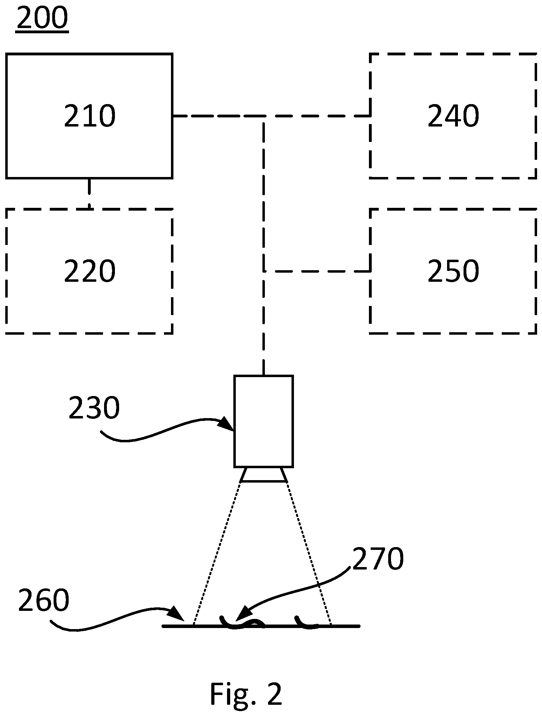

With reference to Figures 1 and 2, a first embodiment will now be described. Figure 1 illustrates a method 100, performed by a chip evaluation system, for controlling a machining process of a workpiece. Figure 2 shows a schematic overview of a chip evaluation system 200 implementing the method 100 according to Figure 1. As will be appreciated, the schematic view is not to scale and the system 200 may comprise further devices, which are not shown in the figure in order to make the figure clearer.

As seen in Figure 1, the method 100 starts with step 110 of obtaining information regarding a first set of cutting parameters used during a machining process of a workpiece. The at least one controller 210 of the chip evaluation system 200 illustrated in Figure 2 is configured to perform this step. The first set of cutting parameters includes parameters that affect the machining performance. For any machining or metal cutting operation, relative motions between the workpiece and cutting tool, or work tool, may be used for gradual removal of material from the workpiece. These relative motions may be reflected by the set of cutting parameters used during the machining operation. The set of cutting parameters includes at least one of cutting speed or cutting velocity, feed rate and depth of cut. The cutting speed is the speed difference, i.e. the relative velocity, between the cutting tool and the surface of the workpiece on which it is operating. The cutting speed may be defined as the rate at the workpiece surface, irrespective of the machining operation used. Feed rate is the velocity at which the cutter is fed, that is, advanced against the workpiece. Cutting speed and feed rate come together with depth of cut to determine the material removal rate, which is the volume of workpiece material that can be removed per time unit. In a preferred embodiment, the obtained set of cutting parameters may comprise feed rate and depth of cut.

The information regarding the first set of cutting parameters may be obtained in different ways. According to one embodiment, the first set of cutting parameters may be obtained by the at least one controller 210 directly from the machine, which is performing the machining process of the workpiece. According to another embodiment, the first set of cutting parameters may be obtained from an input device 240, wherein the set of cutting parameters may have been inputted by an operator.

The method 100 further comprises step 120 of obtaining imaging data of at least one chip 270 produced during the machining process of the workpiece. As previously described, the chips are the excess material that is removed from the workpiece during the machining process. Thus, the removed excess material is imaged in order to evaluate the machining process. The imaging data is obtained by the at least one controller 210. The imaging data may be received from an input device 240, where the data may be inputted by an operator. However, the imaging data is preferably obtained by the at least one controller 210 automatically. In these embodiments, the at least one controller 210 is configured to receive the data from an imaging device 230, such as a digital camera. Said at least one chip 270 produced during the machining process of the workpiece is then imaged according to step 115 of the method 100. The imaging data imaged in step 115 is thereafter provided to the at least one controller 210.

The at least one chip 270 may be provided to the imaging device 230 in different ways. According to one embodiment, the imaging device 230 may be viewing a fixed scaled-area on a baseplate 260 with a suitable background, e.g. a white background. During the machining process of the workpiece, at least one chip 270 may be captured on this baseplate 260. The at least one chip 270 may be captured separately by a capturing arm and transported to the baseplate 260. Alternatively, the imaging device 230 and the baseplate 260 may be placed in such way that the at least one chip 270 naturally falls onto the baseplate 260 due to gravity during the machining process. This arrangement may be attachable inside the machine using attaching means such as screws and/or magnetic attachments. Once the at least one chip 270 is placed on the baseplate 260, the imaging device 230 may take an image comprising imaging data of the at least one chip 270 and the imaging data may thereafter be provided to the at least one controller 210. In one embodiment, the baseplate 260 may be equipped with an objection detection feature, which may trigger image acquisition such that an image is taken automatically when a chip 270 is captured on the baseplate 270. After each image acquisition, the at least one chip 270 located on the baseplate 260 is removed, such that new images with other chips may be imaged. According to one embodiment, the baseplate 260 may be automatically wiped for making room for capturing the next chip.

After that imaging data has been obtained, the method 100 continues with step 125 of determining a chip type of the at least one chip 270 based on the obtained imaging data. As previously described, the chip type is determined by the appearance, i.e. the geometry, of the chip 270. The geometry of the chip 270 may comprise size and shape of the chip. By studying the type of chips created during the machining process, a lot information about the machining process may be obtained and the chip type may indicate the quality of the machining process. In some embodiments, the step 125 of determining a chip type of the at least one chip 270 based on the obtained imaging data may comprise step 130 of extracting a geometry of said at least one chip 270 from said obtained imaging data and step 135 of determining the chip type of the at least one chip 270 based on the extracted geometry of the at least one chip. This may be performed by using, for example, digital image processing. Additionally, this may be performed by using a machine-learning algorithm. All these steps are performed by the at least one controller 210 of the chip evaluation system 200.

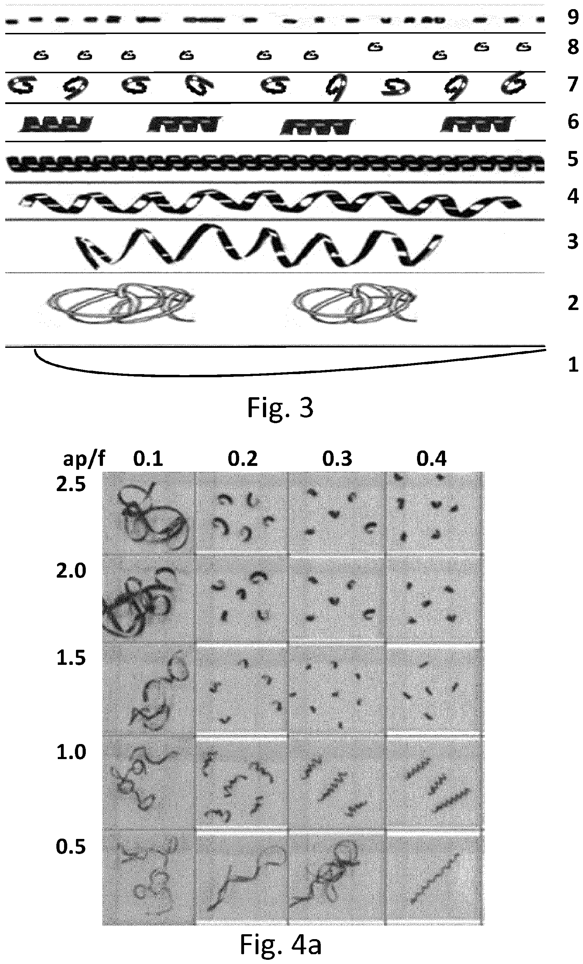

The number of available chip types that the at least one chip 270 may be classified into, or be determined to be of, may differ, but according to one embodiment, nine different chip types, or chip categories, may be used. Figure 3 illustrates the nine different chip types according to this embodiment. As seen in Figure 3, the different chips on the respective rows have different geometries. They have different sizes and different shapes. The chip types may be described by using numbers. The number of the respective chip type is shown to the right in Figure 3. Chips of chip type 1 and 2, i.e. the chips illustrated on the rows marked with 1 and 2 at the bottom of Figure 3, are long and continues. However, the shape of the chip type 1 is a ribbon chip, i.e. a long straight chip, while the shape of chip type 2 is a tubular chip, which is a long snarled chip. Chips that are produced during a machining process of a workpiece that are similar to the chips on the rows for chip type 1 and 2, are generally not desirable. These chip shapes indicate a poor cutting process with poor chip breakage. Such entangled chips would also lead to surface damages on the cutting edge and/or the workpiece. Instead, it is generally desirable that the chips produced during the machining process of the workpiece are similar to the chips shown at the rows for chip types 6, 7 and 8. These chip shapes reflect an optimized machining process.

After that the chip type of the at least one chip 270 is determined, the method 100 continues with step 140 of determining a relation between cutting parameters and chip type. The relation between cutting parameters and chip type is based on said used first set of cutting parameters and the determined chip type. Thus, by determining what kind of chip 270, i.e. chip type, that is produced during a machining process of a workpiece when using a first set of cutting parameters, a relation between cutting parameters and chip type may be determined by the at least one controller 210 of the chip evaluation system 200. The determined relation between cutting parameters and chip type is used to control a subsequent machining process of a workpiece.

Thus, the provided method 100 and chip evaluation system 200 make it possible to determine a more accurate relation between used cutting parameters and chip type produced when using these cutting parameters. As this relation is more accurately determined, the data is more precise, and it is possible to control subsequent machining processes of workpieces more carefully such that an improved quality is achieved. Additionally, this relation is determined in a time efficient way as all data is obtained and handled by the at least one controller 210, which digitally processes the data and increases the traceability of the data. Furthermore, it may be sufficient to obtain image data for one chip 270 produced during the machining process in order to determine the relation between chip type and cutting parameters. It is not necessary to perform continuous analysis of all the chips that are produced during the machining operation. Thus, the present disclosure provides an easy set up for achieving an accurate relation between cutting parameters and chip type.

In some embodiments, the method 100 may further comprise step 145 of obtaining data indicating a material of the workpiece. Additionally, or alternatively, the step 145 may comprise obtaining data indicating a tool type used for the machining process of the workpiece. Thus, in some embodiments, the obtained data in step 145 may indicate both the material of the workpiece and the tool type used for the machining process of the workpiece. Alternatively, the obtained data in step 145 may indicate the material of the workpiece or the tool type used for the machining process of the workpiece. The data obtained in step 145 of the method 100 may thereafter, in step 150, be associated with the determined relation between cutting parameters and chip type. Thus, when the obtained data in step 145 comprises data indicating a material of the workpiece, step 150 comprises associating said material of the workpiece with the determined relation between cutting parameters and chip type. In case the obtained data in step 145 comprises data indicating both a material of the workpiece and a tool type used for the machining process of the workpiece, this data is associated with the determined relation between cutting parameters and chip type in step 150. Alternatively, if the obtained data indicates a tool type used for the machining process of the workpiece, the tool type is associated with the determined relation between cutting parameters and chip type in step 150.

The data indicating the material of the workpiece and/or the tool type used for the machining process of the workpiece may be obtained by the at least one controller 210 in different ways. The data may be received via an input device 240, as illustrated in Figure 2. The input device 240 may comprise, for example, a user interface, which may be configured to receive the data indicating the material of the workpiece and/or the tool type. The data may be entered manually into the input device 240 by an operator. Alternatively, the data indicating the material of the workpiece and/or the tool type used for the machining process of the workpiece may be obtained automatically by the at least one controller 210. For example, the material of the workpiece may be determined by using image processing of received imaging data. Alternatively, the chip evaluation system 200 may further comprise sensors sensing parameters of the workpiece or of the at least one chip 270 to determining the material of the workpiece. Additionally, or alternatively, the data indicating the tool type used for the machining process of the workpiece may be obtained automatically by, for example, reading a barcode placed on the tool or by using image processing of an image of the tool used during the machining process.

By associating the determined relation between cutting parameters and chip type with tool type and/or material used during the machining process, it may be possible to use the determined relation between cutting parameters and chip type with different materials and/or with different work tools. The material of the workpiece and the used tool type may affect the result and the achieved quality of the final product, i.e. when the machining process of the workpiece is complete. Therefore, it may be advantageous to associate the determined relation between cutting parameters and chip type with data indicating a material of the workpiece and/or a tool type used for the machining process of the workpiece. By associating the determined relation with this data, it may be possible to improve the control of subsequent machining processes of workpieces even further. It may thus be possible to predict a result of a final product when using certain cutting parameters, materials and/or tool types. Alternatively, it may be possible to determine which set of cutting parameters that may be used with a certain material and/or tool type to achieve a desired final product.

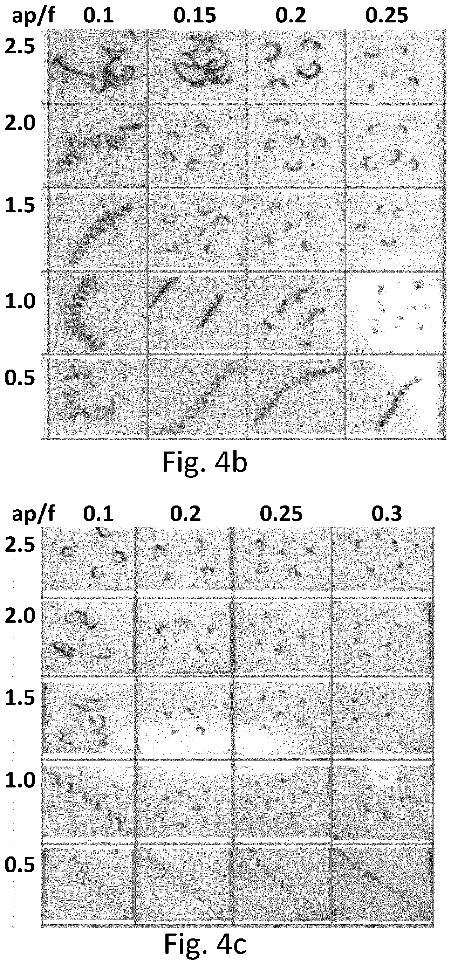

Figures 4a-c illustrate examples of how the material of the workpiece and the tool type used during the machining process may affect the chip type. Figures 4a-c illustrate how the geometry of the chips is changed in dependence of the cutting parameters, where feed rate (f) is indicated along the x-axis and the depth of cut (ap) is indicated along the y-axis. Figure 4a illustrates the chips produced during a machining process when using a first material and a first tool type. Figure 4b illustrates a second tool type and the first material. Figure 4c illustrates a first tool type and a second material. As apparent from the three figures, the same cutting parameters may change the produced chip type considerably in dependence of the used tool type and material. As seen in Figures 4a-c, the chips produced when using a feed rate of 0.1 and depth of cut of 1.5, are of different chip types. As illustrated in Figure 4a, this set of cutting parameters, together with the first material and the first tool type, produces a chip of chip type 2, while in Figure 4b, this set of cutting parameters produces a chip of chip type 3. Finally, as illustrated in Figure 4c, this set of cutting parameters together with the first tool type and the second material instead produce a chip of chip type 7. Accordingly, the same set of cutting parameters produces chips of different chip types in dependence with the used tool type and material of the workpiece.

In some embodiments, the method 100 may further comprise step 155 of saving the determined relation between cutting parameters and chip type in a database. In accordance with such embodiments, the chip evaluation system 200 may comprise at least one memory 220. The determined relation between cutting parameters and chip type may then be saved in said at least one memory 220 to create the database over relations between cutting parameters and chip type. If the relation is associated with material and/or tool type, the relation may be saved together with this data. Additionally, the data may be saved together with the initially obtained imaging data. Thus, a database may be created over the relation between cutting parameters and chip type, which may strongly link cutting parameters with chip type. This may increase the traceability of the relation between cutting parameters and chip type as all historical data may be saved in a digital format that may be easy to revisit. It may be easier to develop a strong correlation between a certain chip type and chip breakage for a given insert in a particular workpiece and cutting parameters. The database may be used in order to predict a result of certain cutting parameters or in order to choose the most suitable cutting parameters in order to achieve a certain result. This will be discussed in more detail below.

By determining relation between cutting parameters and chip types, it may be possible to take advantage of this information in order to better control a subsequent machining process of another workpiece. For example, in some embodiments, the method 100 may further comprise step 160 of receiving a second set of cutting parameters and step 165 of determining a chip type that is going to be produced with said second set of cutting parameters based on the determined relation between cutting parameters and chip type. This may be determined by determining what kind of chip types that have been produced by previously used set of cutting parameters. The method 100 may further comprise step 180 of providing the determined chip type related to the second set of cutting parameters to an output device 250. Thus, it may be possible to determine, beforehand, which kind of chip type that is going to be produced when using a second set of cutting parameters.

In one example, according to the previously described embodiment, an operator may insert a second set of cutting parameters, for example via an input device 240. The at least one controller 210 may obtain this second set of cutting parameters and may determine, based on previously determined relation between cutting parameters and chip type, which chip type that is going to be produced when using the inserted second set of cutting parameters. The at least one controller 210 may provide the result to an output device 250 and the operator may receive the determined chip type via the output device 250. It may thus be possible to determine how different cutting parameters may affect the chip type. In some embodiments, the output device 250 and/or the input device 240 may be included in the chip evaluation system 200. The output device 250 and/or the input device 240 may be, for example, a user interface. The user interface may comprise a display where the determined chip type related to the second set of cutting parameters may be displayed.

In one example embodiment, the chip type may be determined by using a machine-learning algorithm. The machine-learning algorithm may be able to determine the chip type also for combinations of cutting parameters that have not previously been used. In other embodiments, the chip type may be determined by using the relationships between previously produced chip types and cutting parameters.

In some embodiments, the method 100 may further comprise step 175 of receiving a request for a certain chip type for a subsequent machining process of a workpiece. The request may be received by the at least one controller, for example, via an input device 240. The method 100 may thereafter comprise the step 180 of determining, based on the determined relation between cutting parameters and chip type, a third set of cutting parameters in order to achieve said requested chip type. The third set of cutting parameters that may achieve the requested chip type may be determined, for example, by using the database and evaluating historical data. Alternatively, the third set of cutting parameters may be determined by using, for example, the historically determined relationship between cutting parameters and chip type together with a machine-learning algorithm. The machine-learning algorithm may simulate, or predict, how a change in a set of cutting parameters, compared to the first set of cutting parameters, may affect the chip geometry and thereby the chip type. In some embodiment, the request for a certain chip type may additionally be received together with a material of the workpiece and/or a tool type to be used by the machining process.

According to one embodiment, when a third set of cutting parameters is determined based on the determined relation between cutting parameters and chip type, the method 100 may further comprise step 185 of providing the determined third set of cutting parameters to an output device 250. Thus, it may be possible for an operator to request that a certain chip type should be achieved, and the operator may thereafter receive which cutting parameters that may be used in order to achieve that chip type. The present disclosure may make it possible to optimize the set of cutting parameters for a specific operation. Additionally, the described embodiment may facilitate development of new tool types and find the most preferred set of cutting parameters for the new tool types.

In some embodiments, when a third set of cutting parameters is determined based on the determined relation between cutting parameters and chip type, the method 100 may additionally comprise step 190 of controlling a subsequent machining process of the workpiece in accordance with the determined third set of cutting parameters. Thus, it may be possible to insert a certain desired chip type, and then the at least one controller 210 may be configured to control the machining process to use the determined third set of cutting parameters in order to produce a workpiece, in which machining process chips of the desired chip type will be produced.

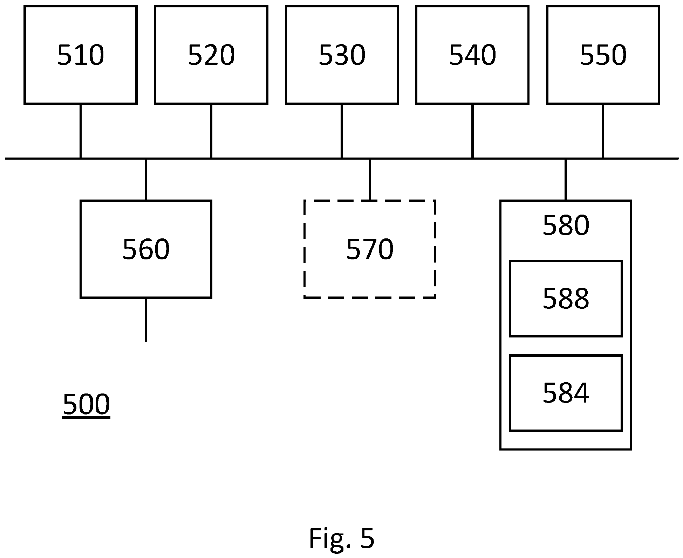

Figure 5 is a block diagram illustrating an exemplary computer system 500 in which embodiments of the present invention may be implemented. This example illustrates a computer system 500 such as may be used, in whole, in part, or with various modifications, to provide the functions of the disclosed system 200. For example, various functions may be controlled by the computer system 500, including, merely by way of example, obtaining information relating to cutting parameters and imaging data and determining a chip type and a relation between the cutting parameters and chip type.

The computer system 500 is shown comprising hardware elements that may be electrically coupled via a bus 590. The hardware elements may include one or more central processing units 510, such as the at least one controller 210, one or more input devices 520 (e.g., a mouse, a keyboard, etc.), and one or more output devices 530 (e.g., a display device, a printer, etc.). The computer system 500 may also include one or more storage device 540. By way of example, the storage device(s) 540 may be disk drives, optical storage devices, solid-state storage device such as a random-access memory ("RAM") and/or a read-only memory ("ROM"), which can be programmable, flash-updateable and/or the like.

The computer system 500 may additionally include a computer-readable storage media reader 550, a communications system 560 (e.g., a modem, a network card (wireless or wired), an infrared communication device, Bluetooth™ device, cellular communication device, etc.), and a working memory 580, which may include RAM and ROM devices as described above. In some embodiments, the computer system 500 may also include a processing acceleration unit 570, which can include a digital signal processor, a special-purpose processor and/or the like.

The computer-readable storage media reader 550 can further be connected to a computer-readable storage medium, together (and, optionally, in combination with the storage device(s) 540) comprehensively representing remote, local, fixed, and/or removable storage devices plus storage media for temporarily and/or more permanently containing computer-readable information. The communications system 560 may permit data to be exchanged with a network, system, computer and/or other component described above.

The computer system 500 may also comprise software elements, shown as being currently located within the working memory 580, including an operating system 588 and/or other code 584. It should be appreciated that alternative embodiments of a computer system 500 may have numerous variations from that described above. For example, customized hardware might also be used and/or particular elements might be implemented in hardware, software (including portable software, such as applets), or both. Furthermore, connection to other computing devices such as network input/output and data acquisition devices may also occur.

Software of the computer system 500 may include code 584 for implementing any or all of the function of the various elements of the architecture as described herein. For example, software, stored on and/or executed by a computer system such as the system 500, can provide the functions of the disclosed system. Methods implementable by software on some of these components have been discussed above in more detail.

References to computer program, instructions, code etc. should be understood to encompass software for a programmable processor or firmware such as, for example, the programmable content of a hardware device whether instructions for a processor, or configuration settings for a fixed-function device, gate array or programmable logic device etc. Modifications and other variants of the described embodiments will come to mind to one skilled in the art having benefit of the teachings presented in the foregoing description and associated drawings. Therefore, it is to be understood that the embodiments are not limited to the specific example embodiments described in this disclosure and that modifications and other variants are intended to be included within the scope of this disclosure. Still further, although specific terms may be employed herein, they are used in a generic and descriptive sense only and not for purposes of limitation. Therefore, a person skilled in the art would recognize numerous variations to the described embodiments that would still fall within the scope of the appended claims. As used herein, the terms "comprise/comprises" or "include/includes" do not exclude the presence of other elements or steps. Furthermore, although individual features may be included in different claims, these may possibly advantageously be combined, and the inclusion of different claims does not imply that a combination of features is not feasible and/or advantageous. In addition, singular references do not exclude a plurality.

## Claims

1. A method (100) for controlling a machining process of a workpiece, wherein the method (100) comprises:
- obtaining (110) information regarding a first set of cutting parameters used during the machining process of the workpiece;
- obtaining (120) imaging data of at least one chip (270) produced during the machining process of the workpiece;
- determining (125) a chip type of the at least one chip (270) based on the obtained imaging data; and
- determining (140) a relation between cutting parameters and chip type based on said used first set of cutting parameters and determined chip type, wherein said relation between cutting parameters and chip type is used to control a subsequent machining process of a workpiece.

2. The method (100) according to claim 1, wherein the method (100) further comprises:
- saving (155) the determined relation between cutting parameters and chip type in a database.

3. The method (100) according to any of claims 1 and 2, wherein the method (100) further comprises
- obtaining (145) data indicating a material of the workpiece and/or a tool type used for the machining process of the workpiece; and
- associating (150) said data indicating the material of the workpiece and/or the tool type used for the machining process of the workpiece with the determined relation between cutting parameters and chip type.

4. The method (100) according to any of the previous claims, wherein the method (100) further comprises:
- receiving (160) a second set of cutting parameters;
- determining (165) a chip type that is going to be produced with said second set of cutting parameters based on the determined relation between cutting parameters and chip type; and
- providing (170) the determined chip type related to the second set of cutting parameters to an output device.

5. The method (100) according to any of claims 1 to 3, wherein the method (100) further comprises:
- receiving (175) a request for a certain chip type for a subsequent machining process of a workpiece; and
- determining (180), based on the determined relation between cutting parameters and chip type, a third set of cutting parameters in order to achieve said chip type.

6. The method (100) according to claim 5, wherein the method (100) further comprises:
- providing (185) the determined third set of cutting parameters to an output device and/or
- controlling (190) the subsequent machining process of the workpiece in accordance with the determined third set of cutting parameters.

7. The method (100) according to any of the previous claims, wherein the step of determining (125) a chip type of the at least one chip (270) based on the obtained imaging data comprises:
- extracting (130) a geometry of said at least one chip from said obtained imaging data; and
- determining (135) the chip type of the at least one chip based on the extracted geometry of the at least one chip.

8. The method (100) according to any of the previous claims, wherein the method (100) further comprises:
- imaging (115) at least one chip produced during the machining process of the workpiece.

9. A chip evaluation system (200) for controlling a machining process of a workpiece, wherein the chip evaluation system (200) comprises at least one controller (210) configured to:
- obtain information regarding a first set of cutting parameters used during the machining process of the workpiece;
- obtain imaging data of at least one chip (270) produced during the machining process of the workpiece;
- determine a chip type of the at least one chip (270) based on the obtained imaging data; and
- determine a relation between cutting parameters and chip type based on said used first set of cutting parameters and determined chip type, wherein said relation between cutting parameters and chip type is used to control a subsequent machining process of a workpiece.

10. The chip evaluation system (200) according to claim 9, wherein the chip evaluation system (200) further comprises at least one memory (220), and wherein the at least one controller (210) further is configured to:
- save the determined relation between cutting parameters and chip type in said at least one memory to create a database over relations between cutting parameters and chip type.

11. The chip evaluation system (200) according to any of claims 9 and 10, wherein the at least one controller (210) further is configured to:
- obtain data indicating a material of the workpiece and/or a tool type used for the machining process of the workpiece; and
- associate said data indicating the material of the work piece and/or the tool type used for the machining process of the workpiece with the determined relation between cutting parameters and chip type.

12. The chip evaluation system (200) according to any claims 9 to 11, wherein the at least one controller (210) further is configured to:
- receive a second set of cutting parameters; and
- determine a chip type that is going to be produced with said second set of cutting parameters based on the determined relation between cutting parameters and chip type; and
- provide the determined chip type related to the second set of cutting parameters to an output device.

13. The chip evaluation system (200) according to any of claims 9 to 11, wherein the at least one controller (210) further is configured to:
- receive a request for a certain chip type for a subsequent machining process of a workpiece; and
- determine, based on the determined relation between cutting parameters and chip type, a third set of cutting parameters in order to achieve said chip type.

14. The chip evaluation system (200) according to claim 13, wherein the at least one controller (210) further is configured to:
- provide the determined third set of cutting parameters to an output device; and/or
- control the subsequent machining process of the workpiece in accordance with the determined third set of cutting parameters.

15. The chip evaluation system (200) according to any of claims 9 to 14, wherein the at least one controller (210) is configured to determine a chip type of the at least one chip (270) based on the obtained imaging data by:
- extract a geometry of said at least one chip from said obtained imaging data; and
- determine the chip type of the at least one chip based on the extracted geometry of the at least one chip.

16. The chip evaluation system (200) according to any claims 9 to 15, wherein the chip evaluation system (200) further comprises an imaging device (230) and said imaging device (230) is configured to:
- image at least one chip produced during the machining process of the workpiece.
